Europäisches Patentamt

European Patent Office

Office européen des brevets

(11) Veröffentlichungsnummer: **0 339 107**
**A1**

## (12) EUROPÄISCHE PATENTANMELDUNG

(21) Anmeldenummer: **88106670.8**

(22) Anmeldetag: **26.04.88**

(51) Int. Cl.4: **F16D 41/04 , F16D 47/04 , G11B 15/43 , G11B 15/50**

(43) Veröffentlichungstag der Anmeldung:
**02.11.89 Patentblatt 89/44**

(84) Benannte Vertragsstaaten:
**AT BE CH DE ES FR GB GR IT LI LU NL SE**

(71) Anmelder: **BRG Mechatronikai Vállalat**
**Polgár u. 8-10**
**H-1033 Budapest(HU)**

(72) Erfinder: **Nagy, Gabor**
**Gaal Jozsef utca 4**
**HU-1122 Budapest(HU)**
Erfinder: **Neumann, György**
**Ugocsa utca 14**
**HU-1126 Budapest(HU)**

(74) Vertreter: **Füchsle, Klaus, Dipl.-Ing. et al**
**Hoffmann . Eitle & Partner Patentanwälte**
**Arabellastrasse 4**
**D-8000 München 81(DE)**

(54) **Kupplungsanordnung, insbesondere zum Antrieb der Magnetbandspindel von Magnetbandaufnahme- und/oder Abspielgeräten.**

(57) Die Erfindung betrifft eine Kupplungsanordnung (1) die ein automatisches zweiseitiges asynchrones Schaltwerk (20) aufweist, dessen Mittelscheibe (21) mit einer ersten Anschlussstelle gekoppelt ist, desweiteren beide Seiten des Schaltwerkes (20) über je einen Freilauf (30, 40) mit je einer weiteren Anschlussstelle gekoppelt sind, wobei die Sperrichtungen der Freiläufe (30, 40) entgegengesetzt sind. Bei der Anwendung in Magnetbandabspiel-oder Aufnahmegeräten ist die erste Anschlusstelle an einer Bandspindel , die zweite Anschlussstelle an das Gestell des Gerätes und die dritte Anschlussstelle an den Antriebsmotor anschliessbar.

Fig.1

# KUPPLUNGSANORDNUNG, INSBESONDERE ZUM ANTRIEB DER MAGNETBANDSPINDEL VON MAGNETBANDAUFNAHME- UND/ODER ABSPIELGERAETEN

Die Erfindung betrifft eine Kupplungsanordnung, insbesondere zum Antrieb der Magnetbandspindel von Magnetbandaufnahme- und/oder Abspielgeräten, die drei Anschlussstellen aufweist und ein asynchrones Schaltwerk enthält, das mit einer der Anschlussstellen gekoppelt ist.

Auf dem Gebiet des Maschinenbauwesen, insbesondere der Feinmechanik ist eine Vielzahl verschiedener Kupplungsanordnungen bereits bekannt, deren Anzahl sich bei Auftreten neuer technischer Aufgaben ständig erweitert.

Das Fachbuch von Dr. Zénó Terplán "Különleges tengelykapcsolók" (Spezielle Kupplungen), Technischer Verlag, Budapest, 1971 kann als gutes Beispiel für Obiges dienen.

Eine der Aufgaben, die auf dem Gebiet der Feinmechanik die Anwendung von Kupplungen beanspruchen, ist der Antrieb der Magnetbandspindeln von Tonbandgeräten. Es ist allgemein bekannt, dass die Abspiel- und Aufnahmegeschwindigkeit der Magnetbänder von je einer gesonderten Antriebswelle gesichert werden, die unmittelbar mit dem Band in Berührung steht. Zur Sicherung eines normalen Betriebes hat jedoch die Abspulspindel ein Bremsmoment und die Aufspulspindel eine Bandspannmoment auszuüben, um zu sichern, dass das Band vor und hinter der Antriebswelle gleicherweise im gespannten Zustand ist. Die Aufgabe wird dadurch noch komplizierter, dass auch bei dem Schnellspulen bei wesentlich höherer Bandgeschwindigkeit für ein entsprechend spannendes Moment zu sorgen ist.

Bei für professionelle Zwecke verwendeten Geräten. insbesondere bei vielkanäligen Datenerfassungs- und Journalanfertigungsvorrichtungen ist das Bewegen des Bandes in zwei Richtungen erforderlich, daraus ergibt sich, dass die gleiche Spindel einerseits die Funktion einer Aufspulaufgabe und andererseits die einer Abspulaufgabe versehen muss. In der Praxis haben sich zu diesem Zwecke dreimotorige Geräte verbreitet, wobei ausser dem Antriebsmotor den Wellen der beiden Spindeln jeweils ein gesondert gesteuerter Motor zugeordnet wurde und die Steuerung der Motoren sorgte für die erforderlichen Betriebsbedingungen.

Die Anwendung von drei Motoren und die Sicherung der dazugehörigen Steuerungsaufgaben erhöhten einerseits den Platzbedarf und andererseits den Kostenaufwand, daraus ergibt sich das Bestreben, eine der dreimotorigen Ausführung gleichwertige Lösung in einmotoriger Ausführung zu entwickeln.

Bei Geräten, die zum Abspielen in einer Richtung geeignet sind, ist eine Lösung bekannt geworden, bei welcher das Aufspulmoment über ein eingefügtes Magnetschaltwerk unter Anwendung einer mit dem Antriebsmotor realisierten unmittelbaren Verbindung gewährleistet wurde. Das Magnetschaltwerk ist auch in den Fällen zur Übertragung eines entsprechenden Momentes geeignet, wenn die Drehzahlen der beiden geschalteten Seiten bedeutend voneinander abweichen. Eine derartige Lösung ist in Dr.-Ing. Christian Scholz "Handbuch der Magnetspeichertechnik" (VEB Verlag Technik, Berlin, 1978 pp. 287-289) beschrieben.

Die Aufgabe der Erfindung besteht in der Schaffung einer Kupplungsanordnung, die drei Anschlussstellen aufweist und dazu fähig ist, auf eine an einer der Anschlussstellen angeschlossene Welle unabhängig von deren Drehrichtung ein vorgegebenes Drehmoment in Richtung oder aus der Richtung der einen oder anderen der an den beiden anderen Anschlussstellen angeschlossenen Zwangsantriebe (mitinbegriffen der Antrieb mit Zerodrehzahl) zu übertragen.

Zur Lösung der gestellten Aufgabe führte die Erkenntnis, dass es zweckmässig ist, anstelle des üblicherweise verwendeten asynchronen Schaltwerkes ein zweiseitiges asynchrones Schaltwerk zu verwenden, dessen Mittelteil die Hauptanschlussstelle bilden würde und in Richtung der beiden anderen Anschlussstellen würde sich je eine Seite des Schaltwerkes über je einen Freilauf anschliessen, deren Sperrichtung einander entgegengesetzt ist.

Auf dieser Erkenntnis beruhend wurde der Erfindung gemäss eine solche Kupplungsanordnung ausgebildet, die einen Freilauf, der mit dem Schaltwerk und einer anderen Anschlussstelle gekoppelt ist und ein zweiseitiges asynchrones Schaltwerk aufweist, das mit einer Mittelscheibe versehen ist, die mit der erwähnten ersten Anschlussstelle verbunden ist, desweiteren eine Seite des Schaltwerkes mit dem Freilauf gekoppelt ist, während die andere Seite des Schaltwerkes über einen anderen Freilauf, dessen Sperrichtung der des erwähnten Freilaufes entgegengesetzt ist, mit der dritten Anschlussstelle gekoppelt ist.

In Hinsicht auf die konstruktionelle Ausführung ist eine koaxiale Anordnung von Vorteil, bei welcher die Mittelscheibe des Schaltwerkes mit der Achse der Anordnung verdrehungsfrei gekoppelt is und beide Freiläufe um die Achse, und zwar dazu gelagert angeordnet sind.

Die Erzeugung eines konstanten Momentes kann im Falle verschiedener relativer Geschwindigkeiten eine wesentliche Anforderung sein, bei einer dazu geeigneten Ausführungsform der Erfindung wird das Schaltwerk von einem Magnetschaltwerk gebildet, auf dessen Mittelscheibe ein aus Permanentmagneten ausgebildeter Polring ausgebildet ist, dem gegenüber ist zweiseitig über je einen Luftspalt je eine aus magnetisierbarem Material bestehende Scheibe auf der Achse gelagert angeordnet, wobei die Scheiben mit den Freiläufen gekoppelt sind.

Zum Zwecke der Sicherung der Einstellbarkeit der Grösse des Momentes ist es vorteilhaft, wenn zwischen den Scheiben und dem Polring ein Luftspalt mit verstellbarer Grösse ist. Diese zuletzt genannte Bedingung kann leicht erfüllt werden, wenn die Scheiben an den gewindigen Anschlussspindeln der Freiläufe über mit Gewinde versehene Hülsen befestigt sind.

Der Anschluss an die Bandspindel des Magnetbandaufnahme- oder Abspielgerätes kann vorzugsweise auf die Weise realisiert werden, dass die Mittelscheibe des Schaltwerkes mit der angetriebenen oder gebremsten Bandspindel, die Anschlussstelle des ersten Freilaufes, - vorzugsweise der Wellenstumpf des Freilaufes - mit dem Gestell des Gerätes und die Anschlussstelle des zweiten Freilaufes
- vorzugsweise der Wellenstumpf des zweiten Freilaufes
- mit dem Motor des Gerätes gekoppelt sind.

Nachstehend wird die erfindungsgemässe Kupplungsanordnung anhand von Ausführungsbeispielen unter Bezugnahme auf die beigelegte Zeichnung näher erläutert.

In der Zeichnung zeigen:
Fig. 1 ein allgemeines Konstruktionsschema der erfindungsgemässen Kupplungsanordnung,
Fig. 2 ein Ausführungsbeispiel der Erfindung im Halbschnitt,
Fig. 3 ein eine bevorzugte Anwendung der erfindungsgemässen Kupplungsanordnung veranschaulichendes Anwendungsschema, und
Fig. 4a und 4b die Funktion der erfindungsgemässen Kupplungsanordnung veranschaulichende kinematische Diagramme.

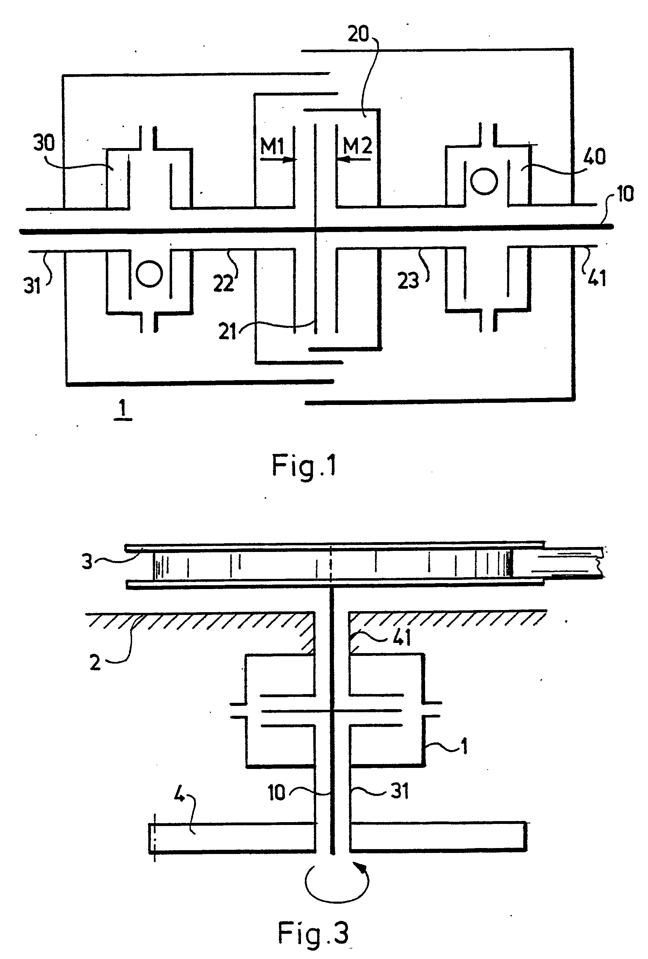

In der Fig. 1 wurde ein Schema der erfindungsgemässen Kupplungsanordnung 1 veranschaulicht. Die verwendeten Zeichen entsprechen den Vorschriften des Standardes MSZ KGST /RGW/ 2519. In der Mittellinie der Anordnung ist eine Welle 10 angeordnet, deren eine Ende eine Anschlussstelle der Anordnung bildet. Um die Welle 10 ist kraftschlüssig ein zweiseitiges Schaltwerk 20 angeordnet, dessen Mittelscheibe 21 mit der Welle 10 gekoppelt ist, wobei diese Kopplung (im allgemeinen Verkeilung oder enge Anpassung) ene realtive Winkelverdrehung der Mittelscheibe 21 und der Welle 10 zueinander verhindert. Beide Seiten des Schaltwerkes 20 sind mit der Mittelscheibe 21 verbunden, zwischen diesen ist die Übertragung eines Momentes M1 bzw. M2 von vorgegebener Grösse möglich. Die Ausgangswelle des auf der linken Seite befindlichen Schaltwerkes wird von einer um die Welle 10 gelagerten und relativ dazu frei verdrehbaren Hülse 22 gebildet. Die Welle des auf der rechten Seite befindlichen Schaltwerkes wird von einer der Hülse 22 ähnlichen Hülse 23 gebildet.

Mit der Hülse 22 ist ein erster Freilauf 30 gekoppelt, der um die Welle 10 gelagert angeordnet ist und sein der Hülse 22 gegenüberliegender Wellenstumpf 31 bildet die zweite Anschlussstelle der Anordnung. An der anderen Seite des Schaltwerkes 20 ist ein mit der Hülse 23 gekoppelter zweiter Freilauf 40 angeschlossen, dessen der Hülse 23 gegenüberliegender Wellenstumpf 41 die dritte Anschlussstelle der Anordnung bildet. Die Freiläufe 30 und 40 sind vorzugsweise auf gleiche Weise ausgebildet, ihre Sperrichtungen sind jedoch entgegengesetzt.

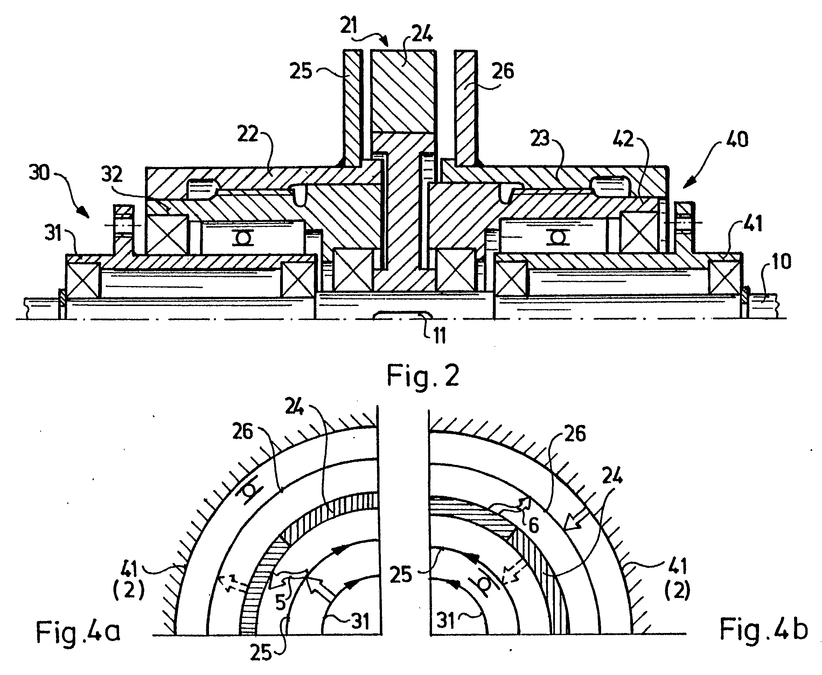

In der Figur 2 ist eine konkrete Ausführungsform der in Fig. 1 veranschaulichten Anordnung im Halbschnitt dargestellt. Die formschlüssige Verbindung zwischen der Mittelscheibe 21 des Schaltwerkes 20 und der Welle 10 wird durch einen in einer Keilnut 11 angeordneten Keil gesichert. Den äußeren Teil der Mittelscheibe 21 bildet ein aus mehreren Permanentmagneten ausgebildeter Polring 24, der zum Beispiel acht Magnetpole aufweist. Die Magnetisierungsrichtung der diese bildenden kreisausschnittförmigen Magneten ist zu der Welle 10 parallel und abwechselnd gegensinnig gerichtet. Dem Polring 24 gegenüber sind zwei aus magnetisierbarem Material bestehende Scheiben 25 und 26 angeordnet, wobei die magnetischen Kraftlinien der den Polring 24 bildenden Magnete sich den zwischenliegenden Luftspalt überbrückend über die Scheiben 25 und 26 schließen.

Die Scheibe 25 bildet einen Teil des auf der linken Seite angeordneten Schaltwerkes und ist an dem auf der rechten Seite befindlichen Ende der mit Innengewinde ausgebildeten Hülse 22 befestigt.

Die Scheibe 26 ist ähnlich ausgebildet und an dem auf der linken Seite befindlichen Ende der ebenfalls mit einem Innengewinde versehenen Hülse 23 befestigt. Die innere Hülse des auf der linken Seite befindlichen Freilaufes 30, zu der auch der Wellenstumpf 31 gehört, ist mittels Lager an der Welle 10 angebracht und ist an ihrem äußeren Teil 32 mit einem Gewinde versehen, das mit dem Innengewinde der Hülse 22 in Eingriff steht. Das innere Ende des äußeren Teils 32 ist über ein Lager an der Welle 10 abgestützt. Der auf der rechten Seite befindliche Freilauf 40 ist auf ähnliche Weise ausgebildet und dessen äußerer Teil 42 dient zur Führung der Hülse 23. Durch die mittels Gewinde realisierte Befestigung kann die Breite des sich zwischen den Scheiben 25 und 26 und dem Polring 24 ausbildenden Luftspaltes und somit die Grösse des übertragbaren Momentes geregelt werden.

Eine bevorzugte Anwendungsmöglichkeit der gemäss der Erfindung ausgebildeten zweiseitigen Kupplungsanordnung wird durch den Antrieb der Bandspindeln eines vor- und zurücklaufenden einmotorigen Magnetbandgerätes zur Speicherung von Berichten gebildet. Eine derartige Anwendung zeigt das vereinfachte Schema in fig. 3. Auf der Aussenseite des Gestells 2 des berichtspeichernden Gerätes ist die eine Bandspindel 3 zu sehen. Auf der anderen Seite des Gestells 2 ist die erfindungsgemässe zweiseitige Kupplungsanordnung 1 auf die Weise befestigt, dass der Wellenstumpf 41 des Freilaufes 40 an dem Gestell 2 befestigt ist und die Welle 10 gleichzeitig dei Welle der Bandspindel 3 bildet. An dem Wellenstumpf 31 des Freilaufes 30 ist ein Zahnrad 4 angeschlossen, das mit dem Motor des berichtespeichernden Gerätes verbunden ist und sich bei laufendem Motor in die eine oder andere Richtung dreht, wobei seine Drehgeschwindigkeit und Drehrichtung von dem Motor vorgegeben ist.

Nachstehend wird die Funktion der erfindungsgemäss ausgebildeten Kupplungsanordnung 1 anhand des Anwendungsbeispieles von Fig. 3 unter Bezugnahme auf die Figuren 4a und 4b näher beschrieben. In Abhängigkeit von der Bandbewegungsrichtung des berichtespeichernden Gerätes kann die Bandspindel 3 des Gerätes entweder die Funktion der Aufspulspindel oder die der Abspulspindel versehen. Die Geschwindigkeit des Bandes wird nicht durch das von der Bandspindel ausgeübte Moment bestimmt, bei der Aufspulung muss jedoch die Bandspindel 3 ein zu der gegebenen konstanten Geschwindigkeit des Bandes in gleicher Richtung wirkendes Aufspulmoment ausüben, während bei der Abspulung die Spannung des in entgegengesetzter Richtung bewegten Bandes durch Ausüben eines Bremsmomentes mit vorgegebener Grösse gesichert werden muss.

Anhand der Figuren 4a und 4b ist ersichtlich, dass die erfindungsgemäss ausgebildete Kupplungsanordnung 1 die oben angegebenen Bedingungen automatisch erfüllt und die Umschaltung zwischen den beiden Betriebszuständen durch Verändern der Drehrichtung des Zahnrades 4 verwirklicht. In der Figur 4a wurden in einem Viertelkreis mittels zueinander radial versetzter Kreisbögen die wichtigsten Konstruktionselemente der Kupplungsanordnung 1 gekennzeichnet.

Der innerste Kreisbogen entspricht den Wellenstumpf 31, der über das Zahnrad 4 von dem Motor in der auf dem Kreisbogen markierten Pfeilrichtung mit konstanter Geschwindigkeit gedreht wird. In dieser Richtung sperrt der Freilauf 30 und die Hülse 22 dreht sich gemeinsam mit der eingezeichneten Scheibe 25 mit gleicher Winkelgeschwindigkeit. Die starre Verbindung ist in der Figur 4a mit dem mit Doppellinie ausgezogenen radial gerichteten Pfeil veranschaulicht. Die Drehung der aus magnetisierbarem Material bestehenden Scheibe 25 übt auf die ihr gegenüber angeordnete Scheibe 21 en Antriebsmoment Mh aus, d.h. genauer auf deren Polring 24. In den Figuren 4a und 4b wurden die in verschiedene Richtungen magnetisierten Pole mittels senkrechter, bzw. waagerechter Linien eingezeichnet. Die Mittelscheibe 21 kann sich jedoch nicht mit der Winkelgeschwindigkeit der Scheibe 25 drehen, da die Geschwindigekit des Bandes konstant und geringer als die sich bei eingestellter Drehzahl ergebende Umfangs geschwindigkeit ist, die sich zum Beispiel bei Bandriss ausbilden würde. Die Banspindel 3, die durch die Welle 10 starr mit dem Polring 24 gekoppelt ist, dreht sich infolgedessen mit geringerer Geschwindigkeit als die Scheibe 25, das sich ausbildende Antriebsmoment Mh bildet das Aufspulmoment des Bandes. Die sich bei der Drehzahldifferenz ergebende Antriebsverbindung ist in Fig. 4a mit dem Pfeil 5 gekennzeichnet.

Die Drehung des Polringes 24 zieht die Drehung der ihm gegenüberliegenden anderen Scheibe 26 nach sich. Diese Drehung wird von keinem Moment begleitet, da der Freilauf 40 in dieser Richtung im Verhältnis zu dem an dem Gestell 2 befestigten Wellenstumpf 41 die Scheibe 26 freigibt. Das ohne Moment erfolgende Gemeinsamdrehen ist in der Figur 4a mit einem gestrichelt angegebenen Pfeil gekennzeichnet, das freie Verdrehen ist mit einer eine Kugel imitierenden Kennzeichnung veranschaulicht.

Wenn sich die Drehrichtung des Bandes ändert, funktioniert die Bandspindel 3 als Abspulspindel und das Sand dreht den Polring 24 mit einer der Bandgeschwindigkeit entsprechenden Winkelgeschwindigkeit in die entgegengesetzte Richtung. Der Antrieb wird in diesem Falle von dem Band gesichert. Die Verhältnisse sind in der Figur 4b veranschaulicht. Der Motor dreht den Wellenstumpf 31 in einer im Vergleich mit dem in der Figur 4a angegebenen Fall entgegengesetzten Richtung mit einer die Umfangsgeschwindigekit des Polringes 24 überschreitenden Geschwindigkeit, dieses wurde auf dem zu dem Wellenstumpf 31 gehörenden Bogen mit zwei Pfeilen gekennzeichnet. Der Freilauf 30 wird nun in entgegengesetzte Richtung angetrieben, dies ist jedoch die Richtung der freien Verdrehung, somit übt ene in diese Richtung erfolgende Drehung des Wellenstumpfes 31 kein Moment auf die Scheibe 25 aus. Die Kugelkennzeichnung veranschaulicht die freie Verdrehung. Der mit gestrichelter Linie markierte Pfeil weist darauf hin, dass die Scheibe 25 ohne Moment mit dem Polring 24 mitläuft.

Der Freilauf 40 sperrt jedoch in dieser Richtung, somit stehen infolge des stehenden Wellenstumpfes 41 auch die Hülse 23 und die daran befestigte Scheibe 26. Zwischen dem sich drehenden Polring 24 und der stehenden Scheibe 26 entsteht ein Bremsmoment Mf, das mit dem Pfeil 6 markiert ist. Im Resultat der Bremsung spannt sich das Band, und bei dem Abspulen muss gerade diese Spannung für die Abspulspindel gesichert werden.

Die erfindungsgemäss ausgebildete Kupplungsanordnung 1 kann somit bei der veranschaulichten Ausführungsform bei der Bandbewegung in beide Richtungen die erforderlichen Momentverhältnisse der Bandspindel 3 sichern, wobei diese Verhältnisse nicht nur bei der Abspielgeschwindigkeit sondern auch bei schneller Vor- und Rückspulung unverändert bestehen. Die Induktion der in den Polringen 24 verwendeten Magnete, bzw. die richtige Wahl der Abstände der Luftspalte ermöglicht die Einstellung der erforderlichen Momentes. Zwischen den Hülsen 22 und 23 und den Scheiben 25, 26 sorgt die in Achsenrichtung verstellbare Gewindeverbindung für die erforderliche Einstellbarkeit der Spul- und Bremsmomente.

Da für die Funktion die Aenderung der Drehrichtung des Zahnrades 4, bzw. die Anederung der Bewegungsrichtung des Bandes erforderlich ist, ermöglicht die erfindungsgemäss ausgebildete Kupplungsanordnung die Ausbildung eines mit einem einzigen Motor angetriebenen und zur Bandbewegung in zwei Richtungen geeigneten Laufwerkes.

In Hinsicht auf die Funktion ist die Ausbildung der magneitschen Verbindung in dem Schaltwerk 20 von Vorteil, es ist jedoch leicht ersichtlich, dass die Funktion nicht beeinflusst wird, wenn in dem Schaltwerk eine solche Verbindung besteht, die zwischen den geschalteten Teilen bei Drehzahlunterschied eine momentübertragende Reibkopplung (mit Feder gepresst), hydraulische oder eine beliebige andersartige Kupplung realisiert.

Die Vorteile der Erfindung wurden für den Anwendungsfall in berichtspeichernden Geräten erläutert, für einen Fachmann liegt es jedoch auf der Hand, dass die erfindungsgemäss ausgebildete über drei Anschlussstellen verfügende Kupplungsanordnung 1 auf einer Vielzahl sonstiger Anwendungsgebiete ebenfalls vorteilhaft verwendet werden kann.

**Ansprüche**

1. Kupplungsanordnung, insbesondere zum Antrieb der Magnetbandspindel von Magnetbandaufnahme- und/oder Abspielgeräten, die drei Anschlussstellen aufweist und ein asynchrones Schaltwerk enthält, das mit der einen Anschlussstelle gekoppelt ist, dadurch **gekennzeichnet,** dass sie einen Freilauf (40), der mit dem Schaltwerk und einer anderen Anschlussstelle gekoppelt ist, und ein zweiseitiges asynchrones Schaltwerk (20) aufweist, wobei eine Mittelscheibe (21) des Schaltwerkes (20) mit der erwähnten ersten Anschlussstelle verbunden ist, desweiteren eine Seite des Schaltwerkes (20) mit dem Freilauf (40) gekoppelt ist, während die andere Seite des Schaltwerkes (20) über einen anderen Freilauf (30), dessen Sperrichtung der des erwähnten Freilaufes (40) entgegengesetzt ist, mit der dritten Anschlussstelle gekoppelt ist.

2. Kupplungsanordnung nach Anspruch 1, dadurch **gekennzeichnet,** dass die Mittelscheibe (21) des Schaltwerkes (20) mit der Welle (10) der Anordnung verdrehungsfrei gekoppelt ist und beide Freiläufe (40, 30) um die Welle (10) gelagert angeordnet sind.

3. Kupplungsanordnung nach Anspruch 2, dadurch **gekennzeichnet,** dass das Schaltwerk (20) von einem Magnetschaltwerk gebildet ist, an dessen Mittelscheibe (21) ein aus Permanentmagneten ausgebildeter Polring (24) angeordnet ist, dem gegenüberliegenden auf beiden Seiten über je einen Luftspalt je eine aus magnetisier barem Material bestehende Scheibe (25, 26) im Verhältnis zur Welle (10) gelagert angeordnet ist und die Scheiben (25, 26) mit den Freiläufen (30, 40) gekoppelt sind.

4. Anordnung nach Anspruch 2, **dadurch gekennzeich net,** dass zwischen den Scheiben (25, 26) und dem Polring (24) ein Luftspalt mit stellbarer Grösse ausgebildet ist.

5. Anordnung nach Anspruch 4, dadurch **gekennzeichnet** dass die Scheiben (25, 26) an den gewindigen Anschlussspindeln der Freiläufe (30, 40) über mit Gewinde versehene Hülsen (22, 23) befestigt sind.

6. Anordnung nach einem der Ansprüche 1 bis 5, dadurch **gekennzeichnet,** dass die Mittelscheibe (21) des Schaltwerkes (20) mit der angetriebenen oder gebremsten Bandspindel (3), die Anschlussstelle, vorzugsweise der Wellenstumpf (41) des ersten Freilaufes (40) mit dem Gestell (2) des Gerätes und die Anschlussstelle, vorzugsweise der Wellenstumpf (31) des zweiten Freilaufes (30) mit dem Motor des Gerätes gekoppelt sind.

30

M1  M2

20

40

10

31  22  21  23  41

1

Fig.1

3

2

41

1

4  10  31

Fig.3

Fig. 2

Fig. 4a

Fig. 4b

EP 0 339 107 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 044 868 (ERICH BERGER) <br> * Figur 1; Spalte 2, Zeilen 46-64; Spalte 4, Zeile 64 - Spalte 5, Zeile 9 * <br> --- | 1,2 | F 16 D 41/04 <br> F 16 D 47/04 <br> G 11 B 15/43 <br> G 11 B 15/50 |
| A | DE-A-1 474 554 (TELEFUNKEN GMBH) <br> * Figur 1; Seite 4, Zeile 16 - Seite 5, Zeile 8; Anspruch 1 * <br> --- | 1-3 | |
| A | US-A-2 868 340 (L.D. WILSON et al.) <br> * Figur 1; Anspruch 5; Spalte 3, Zeilen 28-49 * <br> --- | 1-3 | |
| A | GB-A- 880 327 (TELEFUNKEN GMBH) <br> * Ansprüche 4,10; Figur 6 * <br> ----- | 1,3 | |

RECHERCHIERTE SACHGEBIETE (Int. Cl.4)

G 11 B 15/00
F 16 D 41/00
F 16 D 47/00
F 16 D 27/00

Der vorliegende Recherchenbericht wurde für alle Patentansprüche erstellt

| Recherchenort | Abschlußdatum der Recherche | Prüfer |
|---|---|---|
| BERLIN | 30-11-1988 | GERARD E.A.S. |